# EUROPÄISCHE PATENTSCHRIFT

(11) **EP 2 128 495 B1**
(45) Veröffentlichungstag und Bekanntmachung des Hinweises auf die Patenterteilung: **09.03.2011**
(21) Anmeldenummer: 09155822.1
(22) Anmeldetag: 23.03.2009
(51) Int. Cl.: F16H 37/04, F16H 61/70, F16H 61/04, F16H 3/00

(54) **Mehrgruppengetriebe eines Kraftfahrzeuges**
Motor vehicle multi-group drive
Boîte de vitesse à plusieurs groupes d'un véhicule automobile

(30) Priorität: 08.05.2008 DE 102008001646
(43) Veröffentlichungstag der Anmeldung: 02.12.2009
(73) Patentinhaber: ZF Friedrichshafen AG, 88038 Friedrichshafen (DE)
(72) Erfinder: Dittrich, Alan, 78464, Konstanz (DE); Hoffmann, Rayk, 88048, Friedrichshafen (DE)

(56) Entgegenhaltungen:
- DE-A1- 3 626 179
- GB-A- 191 009 604
- US-A- 2 058 802

## Beschreibung

Die Erfindung betrifft ein Mehrgruppengetriebe eines Kraftfahrzeuges und ein Verfahren zum Betrieb eines Mehrgruppengetriebes eines Kraftfahrzeuges gemäß dem Oberbegriff des Patentanspruchs 1 bzw. dem Oberbegriff des Patentanspruchs 7.

Mehrgruppengetriebe bestehen aus zwei oder mehr meist seriell angeordneten Getriebegruppen, durch deren Kombination eine hohe Gangzahl realisierbar ist. Zunehmend werden sie als automatisierte Schaltgetriebe, beispielsweise bestehend aus einer Eingangsgruppe, einer Hauptgruppe und einer Nachschaltgruppe, konzipiert. Derartige Getriebe finden insbesondere in Nutzfahrzeugen Anwendung, da sie eine besonders feine Gangabstufung mit beispielsweise 12 oder 16 Gängen bieten und einen hohen Wirkungsgrad aufweisen. Bei einer geringeren Gangzahl sind auch Konfigurationen lediglich aus einer Hauptgruppe und einer Eingangsgruppe oder einer Hauptgruppe und einer Nachschaltgruppe möglich. Zudem zeichnen sie sich im Vergleich zu manuellen Schaltgetrieben durch einen hohen Bedienungskomfort aus und sind im Vergleich zu Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Durch das Rollen des Fahrzeuges während der Zugkraftunterbrechung können unerwünschte Geschwindigkeitserhöhungen oder Geschwindigkeitsverluste auftreten. Zudem kann ein erhöhter Kraftstoffverbrauch entstehen. Während sich die Zugkraftunterbrechungen bei Personenwagen durch Einbußen der Fahrdynamik in der Regel eher nur störend auswirken, beispielsweise bei einer sportlich orientierten Fahrweise beim Hochschalten, kann sich bei schweren Nutzfahrzeugen die Fahrgeschwindigkeit derart verzögern, dass ein Hochschalten unmöglich wird und es an Steigungen zu unerwünschten Rückschaltvorgängen, Kriechfahrten oder sogar zu zusätzlichen Anfahrvorgängen kommt.

Aus der DE 10 2006 024 370 A1 der Anmelderin ist ein zugkraftunterstütztes automatisiertes Mehrgruppengetriebe mit einer Splittergruppe als Eingangs- oder Vorschaltgetriebe, einem Hauptgetriebe als Grundgetriebe und einer Bereichsgruppe als Ausgangs- oder Nachschaltgetriebe bekannt. Die Bauweise des bekannten Mehrgruppengetriebes mit dem Eingangsgetriebe und dem Hauptgetriebe ermöglicht die Schaltung eines Direktgangs als ein Zwischengang während eines Gangwechsels. Dazu wird temporär eine direkte Verbindung einer Eingangswelle des Eingangsgetriebes mit einer Hauptwelle des Hauptgetriebes mittels einer Lastschaltkupplung hergestellt. Dadurch werden das Hauptgetriebe und die Splittergruppe lastfrei, so dass der eingelegte Gang ausgelegt, das Getriebe synchronisiert und der Zielgang eingelegt werden kann. Die Lastschaltkupplung überträgt dabei ein Motordrehmoment auf den Getriebeausgang, wobei ein freiwerdendes, dynamisches Moment bei einer Drehzahlabsenkung zwischen Ursprungsgang und Zielgang genutzt wird, um den Zugkrafteinbruch weitgehend zu kompensieren. Die Lastschaltkupplung kann zwischen dem Eingangsgetriebe und dem Hauptgetriebe oder zwischen einer üblichen Anfahrkupplung und dem Eingangsgetriebe angeordnet sein. Die Übersetzung des Zwischenganges ist durch die Direktverbindung der Eingangswelle mit der Hauptwelle festgelegt. Die Anfahrkupplung kann beim Gangwechsel zwar eingerückt bleiben, ist aber als separates Anfahrelement weiterhin vorhanden.

Weiterhin ist aus der EP 0 933 558 A1 ein Stufengetriebe eines Kraftfahrzeuges in Vorgelegebauweise bekannt, bei dem einer der Gänge, vorzugsweise ein 2. Gang, auf einer Nebenwelle angeordnet ist. Um den zugkraftunterbrechungsbedingten Schaltruck bei einem Gangwechsel zu mindern, ist am Getriebeeingang, zusätzlich zu einer herkömmlichen Anfahr- oder Trennkupplung, eine Reibkupplung angeordnet, die über die Nebenwelle diesen Gang beaufschlagt. Die beiden Kupplungen können beispielsweise als eine Doppelkupplung ausgebildet sein, wobei eine mit der Anfahrkupplung verbundene Getriebeeingangswelle von einer mit der Reibkupplung verbundenen Hohlwelle koaxial umgeben ist. Die Reibkupplung überträgt im Falle ihrer Betätigung über einen Antriebsradsatz ein Motordrehmoment auf die Nebenwelle, auf der ein Zahnrad des besagten Ganges sitzt, welches im Eingriff mit einem Zahnrad auf einer Getriebeausgangswelle steht.

Bei einem Gangwechsel von einem eingelegten Gang in den Nebenwellengang, also beispielsweise vom 1. Gang in den 2. Gang, wird die Reibkupplung geschlossen, also der Nebengang eingerückt. Dadurch wird infolge der sich einstellenden Drehzahlen der Momentenfluss über die Trennkupplung abgebaut, so dass der Momentenpfad des eingelegten Ganges lastlos wird und der 1. Gang ausgelegt werden kann. Befindet sich das Getriebe nun im Nebenwellengang wird bei dem folgenden Gangwechsel, also beispielsweise vom 2. Gang in den 3. Gang, der Zielgang bei geöffneter Trennkupplung eingelegt und anschließend die Trennkupplung geschlossen, so dass jetzt der Momentenpfad des Nebenwellenganges lastlos wird und die Reibungskupplung wieder geöffnet werden kann. Alle Gangwechsel, bei denen der Nebenwellengang der Ursprungsgang oder der Zielgang ist, sind somit unter Last, also ohne Zugkraftunterbrechung schaltbar. Weiterhin kann der Schaltruck bei Gangwechseln zwischen Gängen, die unmittelbar dem Nebenwellengang benachbart sind, über einen Schlupfbetrieb der Reibkupplung gemindert werden. Bei den übrigen Gangwechseln tritt weiterhin in herkömmlicherweise eine Zugkraftunterbrechung auf.

Das in der EP 0 933 558 A1 beschriebene Getriebe dient dem Ziel, den Schaltkomfort in den besonders schaltruck-relevanten unteren Gängen mit möglichst geringem Aufwand zu verbessern. Insofern ist es in der Lage, die ihm zugrunde liegende Aufgabe in vollem Umfang zu erfüllen. Die Zugkraftunterstützung beschränkt sich allerdings auf bestimmte Gangwechsel. Bei einem Mehrgruppengetriebe mit einer feinen Gangabstufung und einer hohen Gangzahl können sich jedoch die Zugkraftunterbrechungen bei allen Zughoch- und Zugrückschaltungen, also auch in den oberen Gängen, störend auswirken. Eine zusätzliche Nebenwelle und deren Antriebsradsatz benötigen zudem einen entsprechenden Bauraum, der bei Gruppengetrieben mit üblicherweise zwei Vorgelegewellen jedoch nicht immer oder nicht ohne weiteres zur Verfügung steht.

Aus der DE 3626179 A1 ist ein Mehrgruppengetriebe bzw. ein Verfahren zu dessen Betrieb mit den jeweiligen Merkmalen der Oberbegriffe der Ansprüche 1 und 7 der vorliegenden Schrift bekannt. Die zentrale Hauptgruppe dieses Mehrgruppengetriebes weist jedoch nur je eine Übersetzungsstufe für Vorwärtsfahrt und Rückwärtsfahrt auf, wodurch der Fahr- bzw. Schaltkomfort eingeschränkt ist.

Vor diesem Hintergrund liegt der Erfindung die Aufgabe zugrunde, ein Mehrgruppengetriebe und ein Verfahren zum Betrieb eines Mehrgruppengetriebes anzugeben, die mit einfachen, kostengünstigen und bauraumsparenden Mitteln Zugkraftunterbrechungen während Zughochschaltungen und Zugrückschaltungen möglichst weitgehend eliminieren sowie einen hohen Schaltkomfort gewährleisten.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass bei einem Gruppen-Schaltgetriebe mit einem vergleichsweise niedrigen Konstruktionsaufwand Reibkupplungen vorgeschaltet werden können, über die eine Zahnradwechsel-Eingangsgruppe lastgeschaltet und die Schaltvorgänge einer Zahnradwechsel-Hauptgruppe mittels einer Zwischengangschaltung zugkraftunterstützt werden können, so dass ein kostengünstiges automatisiertes Getriebe mit automatgetriebeähnlichem, komfortablem Schaltverhalten und dennoch mit den insbesondere bei Nutzfahrzeugen wichtigen Eigenschaften eines hohen Übertragungswirkungsgrades und einer feinen Gangabstufung zur Verfügung gestellt werden kann.

Demnach geht die Erfindung aus von einem Mehrgruppengetriebe eines Kraftfahrzeuges, mit wenigstens zwei in einem Antriebsstrang angeordneten Getriebegruppen, bei dem Mittel zur Zugkraftunterstützung bei Gangwechseln vorgesehen sind. Zur Lösung der gestellten Aufgabe sieht die Erfindung zudem vor, dass zwischen einem Antriebsmotor und einem Getriebeeingang eine Kupplungseinrichtung mit drei Reibkupplungen angeordnet ist, wobei die erste Reibkupplung als eine Zwischengangkupplung ausgebildet ist, die eingangsseitig mit einer Antriebswelle des Antriebsmotors und ausgangsseitig mit einer mit einer Getriebeabtriebswelle zumindest wirkverbundenen Getriebehauptwelle verbunden ist, wobei die zweite Reibkupplung als eine Lastschaltkupplung ausgebildet ist, die eingangsseitig mit der Antriebswelle des Antriebsmotors und ausgangsseitig mit einem Losrad einer zweiten Gangkonstanten einer als Zahnradgetriebe ausgebildeten Vorschaltgruppe verbunden ist, wobei die dritte Reibkupplung als eine Lastschaltkupplung ausgebildet ist, die eingangsseitig mit der Antriebswelle des Antriebsmotors und ausgangsseitig mit einem Losrad einer ersten Gangkonstanten der Vorschaltgruppe verbunden ist, wobei über die Zwischengangkupplung eine Direktverbindung zwischen der Antriebswelle des Antriebsmotors und der Getriebehauptwelle herstellbar ist und über die Lastschaltkupplungen die Gangkonstanten der Vorschaltgruppe lastschaltbar sind.

Unter einem Gangwechsel wird ein Schaltvorgang verstanden, bei dem ein Ursprungsgang ausgelegt und ein Zielgang eingelegt wird, wobei auch der Spezialfall eingeschlossen ist, dass der Zielgang dem Ursprungsgang entspricht, also keine Übersetzungsänderung erfolgt. Eine Vorschaltgruppe wird auch als Splittergetriebe oder Splittergruppe (GV), eine Hauptgruppe auch als Hauptgetriebe oder Grundgetriebe (HG) und eine Nachschaltgruppe auch als Bereichsgetriebe oder Bereichsgruppe (GP) bezeichnet.

Weiterhin geht die Erfindung aus von einem Verfahren zum Betrieb eines Mehrgruppengetriebes eines Kraftfahrzeuges, mit wenigstens zwei in einem Antriebsstrang angeordneten Getriebegruppen, bei dem bei einem Gangwechsel zugkraftunterstützende Mittel aktiviert werden. Die gestellte Aufgabe bezüglich des Verfahrens wird dadurch gelöst, dass vorgesehene Schaltvorgänge zwischen Gangkonstanten innerhalb einer Vorschaltgruppe mittels einer Lastschaltung durchgeführt werden, bei der zwischen einem Antriebsmotor und einem Getriebeeingang angeordnete, die Gangkonstanten beaufschlagende Lastschaltkupplungen im Schlupf betrieben werden, und dass bei anderen zugkraftrelevanten Schaltvorgängen eine Zwischengangschaltung erfolgt, bei der eine ebenfalls zwischen dem Antriebsmotor und dem Getriebeeingang angeordnete Zwischengangkupplung im Schlupf betrieben wird, wobei über die Zwischengangkupplung eine direkte Kraftflussverbindung zwischen dem Antriebsmotor und einer mit einer Getriebeabtriebswelle zumindest wirkverbundenen Getriebehauptwelle hergestellt wird.

Erfindungsgemäß weist das Mehrgruppengetriebe mit den als Lastschaltkupplungen und der Zwischengangkupplung ausgebildeten erfindungsgemäßen zugkrafterhaltenden Mitteln drei im Kraftfluss hintereinander angeordnete Getriebegruppen auf, wobei eine Vorschaltgruppe und eine Hauptgruppe vorteilhaft als Zahnradgetriebe in Vorgelegebauweise mit wenigstens einer gemeinsamen Vorgelegewelle ausgebildet sind und eine Nachschaltgruppe als ein Planetengetriebe ausgebildet ist. Vorzugsweise wird ein derartiges Getriebe mit zwei Vorgelegewellen konzipiert sein, so dass sich die Leistung entsprechend über zwei Vorgelegewellen verzweigt. Die Erfindung ist grundsätzlich aber ebenso vorteilhaft bei Vorgelegewellengetrieben mit nur einer Vorgelegewelle anwendbar. Auch ist die erwähnte Nachschaltgruppe nur beispielhaft vorhanden, um eine vergleichsweise hohe Gangzahl zur Verfügung zu stellen, nicht aber zwingend notwendig.

Über die Gangkonstanten des Splittergetriebes können die Gangstufen der Hauptgruppe variiert werden. Die sich daraus ergebenden Gänge multipliziert die Bereichsgruppe anschließend wahlweise mit einer Planetenübersetzung. Somit ergeben sich beispielsweise mit einem dreigängigen Grundgetriebe eine Anzahl von n = n_{GV} × n_{HG} x n_{GP} = 2 x 3 x 2 = 12 Vorwärtsgängen und mit einem viergängigen Grundgetriebe 16 Vorwärtsgänge. Ein solches Getriebe ist aufgrund seiner feinen Gangabstufung und seines hohen Schaltkomforts besonders vorteilhaft in Nutzfahrzeugen einsetzbar.

Erfindungsgemäß sind antriebsseitig drei Reibkupplungen montiert, die jeweils die Gangkonstanten der Splittergruppe sowie den Zwischengang steuern. Die Gangwechsel der Gangkonstanten werden durch einen Schlupfbetrieb zweier zugeordneter Reibkupplungen direkt lastgeschaltet. Alle weiteren Gangwechsel werden mit dem Zwischengang über eine weitere Reibkupplung zugkraftunterstützt.

Um ein besonders kompakte Bauform zu erreichen, kann vorgesehen sein, dass die drei Reibkupplungen ein gemeinsames äußeres, motorseitig mit der Antriebswelle verbundenes Kupplungseingangsteil und jeweils ein radial inneres Kupplungsausgangsteil aufweisen. Vorteilhafterweise sind die drei Reibkupplungen dabei koaxial zueinander angeordnet, wobei die mit dem Kupplungsausgangsteil der Zwischengangkupplung verbundene Getriebehauptwelle als eine innere Welle angeordnet ist, welche von einer mit dem Kupplungsausgangsteil der zweiten Reibkupplung verbundenen mittleren Hohlwelle umgeben ist, welche wiederum von einer mit dem Kupplungsausgangsteil der dritten Reibkupplung verbundenen äußeren Hohlwelle umgeben ist, wobei die mittlere Hohlwelle mit dem Losrad der zweiten, motorfernen Gangkonstanten der Vorschaltgruppe verbunden ist und die äußere Hohlwelle mit dem Losrad der ersten, motornahen Gangkonstanten der Vorschaltgruppe verbunden ist. Die Reibkupplungen können als trockene oder nasse Ein- oder Mehrscheibenkupplungen mit den entsprechenden zusammenwirkenden Reibpartnern an Kupplungseingangsteil und Kupplungsausgangsteilen ausgebildet sein.

Über die Zwischengangkupplung ist ein als Direktgang ausgelegter Zwischengang, d.h. eine Direktverbindung zwischen der Antriebswelle und der Getriebehauptwelle bzw. Getriebeabtriebswelle schaltbar. Durch das Zuschalten des Zwischengangs wird das Hauptgetriebe lastfrei und somit schaltbar. Die Zwischengangkupplung stützt dabei im schleifenden Zustand das Motormoment während einer Zughoch- oder Zugrückschaltung am Abtrieb ab, während die Motordrehzahl dem Zielgang angepasst wird. Das bei der Drehzahlanpassung des Motors freiwerdende Drehmoment wird somit zur Zugkrafterhaltung eingesetzt. Sinnvollerweise bleibt während des Schaltens des Zwischenganges die bei dem aktuell eingelegten Ursprungsgang jeweils geschlossene Lastschaltkupplung geschlossen, um die Drehzahl des Zielganges vorzugeben. Bei erreichter Synchrondrehzahl kann der Zielgang eingelegt und der Zwischengang wieder geöffnet werden. Grundsätzlich sind bei einem solchen Gangwechsel auch zugkraftunterstütze Gangsprünge über zwei oder mehr Gangstufen möglich.

Bei der Auslegung des Zwischengangs als Direktgang ist zusätzlich die Funktion einer gegebenenfalls nachgeschalteten Bereichsgruppe in Planetenbauweise zu berücksichtigen, wenn die Getriebehauptwelle über ein solches Nachschaltgetriebe mit der Getriebeabtriebswelle zusammenwirkt. In einer Schaltstellung, bei der die Planetenräder der Bereichsgruppe mit dem Sonnenrad und dem Hohlrad verblockt sind, also das Bereichsgetriebe mit der Drehzahl der Getriebehauptwelle umläuft, ist der Zwischengang folglich der Direktgang des Gesamtgetriebes. Dies ist automatisch auch dann der Fall, wenn, wie bei einer weiteren Ausführungsform der Erfindung vorgesehen sein kann, die Getriebehauptwelle direkt mit der Getriebeabtriebswelle am Getriebeausgang verbunden ist, also durch das Bereichsgetriebe hindurchgeführt ist. Ansonsten entspricht jedoch der Zwischengang einem Direktgang der Zahnradgetriebegruppen, der von der Planetengetriebeübersetzung überlagert ist.

Dabei ist auch zu beachten, dass ein Umschalten der Bereichsgruppe während eines Gangwechsels nicht per se zugkraftunterstützt ist. Eine Erweiterung der Zugkraftunterstützung auf die Bereichsumschaltung kann jedoch vorteilhaft dadurch erreicht werden, dass von vornherein Lastschaltmittel am Bereichsgetriebe angeordnet sind, so dass eine lastschaltbare Bereichsumschaltung möglich ist. Auch dies ist ein Bestandteil der vorliegenden Erfindung.

Ist keine Nachschaltgruppe vorgesehen, so fungiert die Getriebehauptwelle gleichzeitig als Getriebeabtriebswelle des Gesamtgetriebes oder kann mit einer Getriebeabtriebswelle einstückig verbunden sein.

Durch die Zwischengangschaltung wird vorteilhaft bei allen Zugschaltungen eine signifikante Verringerung eines Geschwindigkeitsverlustes und somit im Ergebnis eine Fahrleistungssteigerung erreicht sowie der Schalt- und Fahrkomfort erhöht. Da über den Zwischengang die zu synchronisierenden rotierenden Massen abgebremst werden können, kann die üblicherweise zur Abbremsung der Massen bei Hochschaltvorgängen vorgesehene Getriebebremse entfallen, wodurch weitere Kosten, Einbauraum und Gewicht eingespart bzw. reduziert werden. Zudem werden Schwingungen und Schaltschläge effektiv verringert, da der Antriebsstrang während des Gangwechsels durch den Zwischengang stets vorgespannt bleibt, wodurch eine zusätzliche Erhöhung des Schaltkomforts erreicht wird.

Mit den vorgeschalteten Lastschaltkupplungen, welche die Radsätze der Splittergruppe über eine Wirkverbindung des jeweiligen Losrades mit der Antriebswelle beaufschlagen, ist diese lastschaltbar. Die Lastschaltkupplungen ersetzen die üblicherweise vorgesehenen Schalt- und Synchronisierelemente der Splittergruppe sowie ein separates Anfahrelement, was sich weiter kostengünstig und bauraum- sowie gewichtsparend auswirkt. Schaltungen, bei denen nur die Gangkonstanten der Splittergruppe beteiligt sind, also insbesondere solche, bei denen keine Schaltvorgänge im Grundgetriebe erfolgen, können somit über einen Schlupfbetrieb der beiden Lastschaltkupplungen in besonders kurzer Schaltzeit direkt lastgeschaltet werden. Alle weiteren Gangwechsel werden, wie bereits erläutert, mit dem Zwischengang zugkraftunterstützt.

Zur Verdeutlichung der Erfindung ist der Beschreibung eine Zeichnung mit einem Ausführungsbeispiel beigefügt. In dieser zeigt
- Fig. 1: ein Getriebeschema eines automatisierten Mehrgruppengetrie- bes eines Kraftfahrzeuges mit einer Kupplungseinrichtung mit drei antriebsseitig angeordneten Kupplungen,
- Fig. 1a: einen vergrößerten Ausschnitt von Fig. 1 mit der Kupplungsein- richtung, und
- Fig. 2: eine Schalttabelle des Getriebeschemas mit Last- und Zwi- schengangschaltungen.

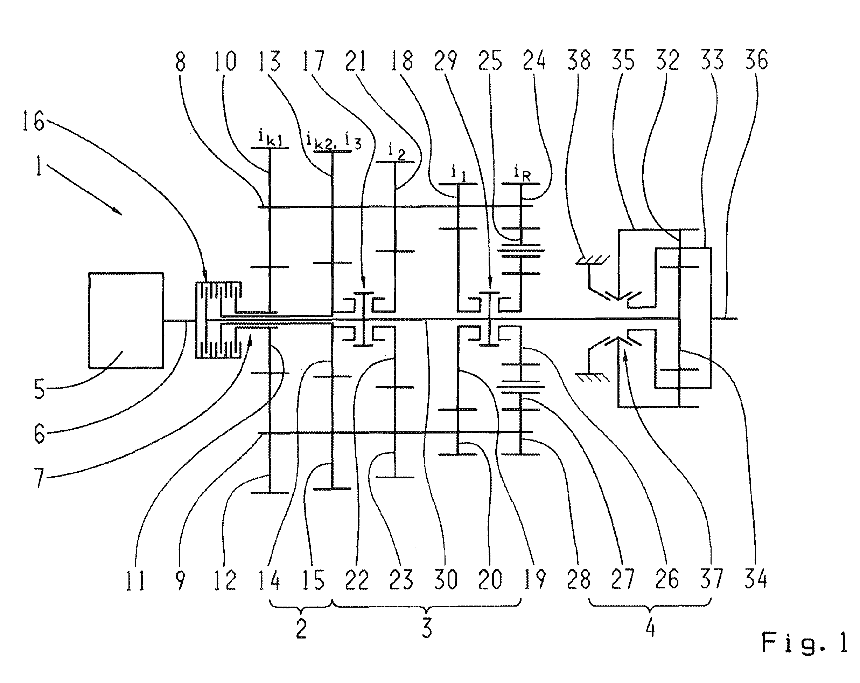

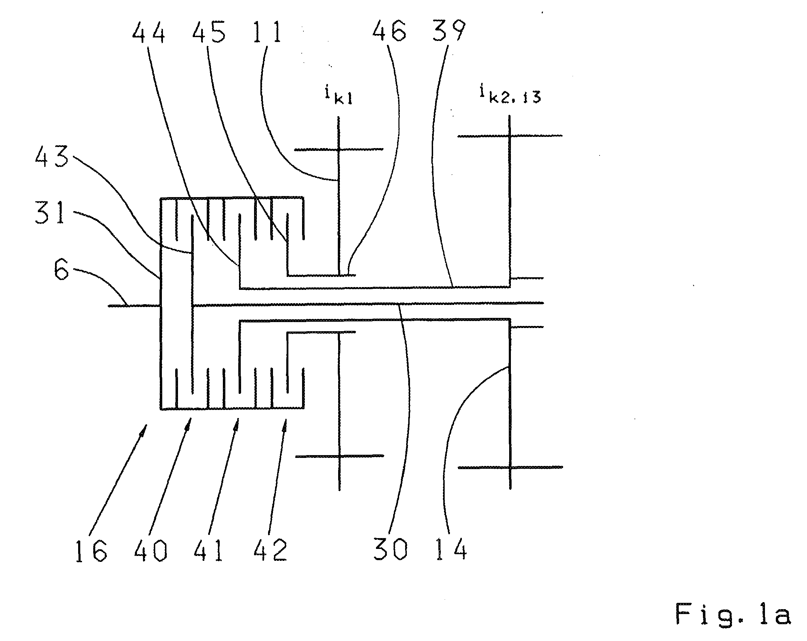

Die Fig. 1 zeigt demnach ein als Zwei-Vorgelegewellen-Getriebe 1 ausgebildetes automatisiertes Mehrgruppengetriebe mit zwei parallelen, drehbar gelagerten Vorgelegewellen 8, 9 und drei hintereinander angeordneten Getriebegruppen 2, 3 und 4, wie es beispielsweise im Antriebsstrang eines Lastkraftwagens vorgesehen sein kann. Ein derartiges Getriebe ist an sich, d.h. ohne Zugkraftunterstützung, insbesondere aus der Baureihe ZF-AS Tronic, und mit einer zugkraftunterstützenden Direktgangschaltung, jedoch mit nicht lastschaltbarer Vorschaltgruppe; aus der eingangs erwähnten DE 10 2006 024 370 A1 der Anmelderin bekannt.

Die erste, motorseitig angeordnete Getriebegruppe 2 ist als ein zweigängiges Splittergetriebe ausgebildet. Die zweite, zentrale Getriebegruppe 3 wird durch ein dreigängiges Haupt- oder Grundgetriebe gebildet. Als dritte, abtriebsseitige Getriebegruppe 4 ist ein nachgeschaltetes zweigängiges Bereichsgetriebe angeordnet.

Das Splittergetriebe 2 weist zwei Gangkonstanten iₖ₁, iₖ₂ auf, die jeweils ein auf der ersten Vorgelegewelle 8 und auf der zweiten Vorgelegewelle 9 drehfest angeordnetes Festrad 10, 12 bzw. 13, 15 umfassen, die mit einem Losrad 11 bzw. 14 kämmen. Die erste Gangkonstante iₖ₁ ist einem Antriebsmotor 5 und die zweite Gangkonstante iₖ₂ dem Hauptgetriebe 3 zugewandt angeordnet.

Das Hauptgetriebe 3 weist drei Vorwärtsgangradsätze i₁, i₂ und i₃ sowie einen Rückwärtsgangradsatz i_{R} auf. Der 1. Hauptgetriebegang i₁ und der 2. Hauptgetriebegang i₂ umfassen jeweils zwei Festräder 18, 20 bzw. 21, 23 und ein Losrad 19 bzw. 22. Der 3. Hauptgetriebegang i₃ ist gemeinsam mit der zweiten Gangkonstante iₖ₂ des Splittergetriebes 2 realisiert. Der Rückwärtsgang-Radsatz i_{R} umfasst zwei Festräder 24 und 28, ein Losrad 26 und zwei drehbar gelagerte Zwischenräder 25, 27 zur Drehrichtungsumkehr, die einerseits mit dem jeweils zugehörigen Festrad 24 bzw. 28 und andererseits mit dem Losrad 26 kämmen.

Zur Schaltung des 1. Hauptgetriebeganges i₁, und des RückwärtsgangRadsatz i_{R} ist eine unsynchronisierte Klauen-Schalteinrichtung 29 vorgesehen, über welche die zugehörigen Losräder 19 bzw. 26 wahlweise drehfest mit einer zentralen Getriebehauptwelle 30 verbindbar sind. Die Schaltung des 2. Hauptgetriebeganges i₂ und des 3. Hauptgetriebeganges i₃ erfolgt über eine weitere Klauen-Schalteinrichtung 17, über die die zugehörigen Losräder 22 bzw. 14 wahlweise drehfest mit der Getriebehauptwelle 30 verbindbar sind.

Das nachgeschaltete Bereichsgetriebe 4 ist als ein Planetengetriebe ausgebildet. Darin ist ein Planetenradsatz 32 mit mehreren nicht explizit dargestellten Planetenrädern von einem Planetenradträger 33 geführt. Die Planetenräder kämmen einerseits mit einem zentralen Sonnenrad 34 und andererseits mit einem äußeren Hohlrad 35. Das Sonnenrad 34 ist mit der Getriebehauptwelle 30 verbunden. Der Planetenradträger 33 ist wiederum mit einer Getriebeabtriebswelle 36 verbunden. Zur Schaltung des Bereichsgetriebes 4 ist eine Schalteinrichtung 37, vorteilhaft mit Synchronisierung, angeordnet. Diese Schalteinrichtung 37 verbindet in einer ersten Schaltstellung das Hohlrad 35 mit einem Gehäuse 38, so dass die Planetenräder zwischen Hohlrad 35 und Sonnenrad 34 umlaufen und die Getriebeabtriebswelle 36 entsprechend der Übersetzung über den Planetenradträger 33 gleichsinnig mit der Getriebehauptwelle 30 angetrieben wird. In einer zweiten Schaltstellung wird das Hohlrad 35 mit dem Planetenradträger 33 verblockt, so dass das Planetengetriebe 4 und damit die Getriebeabtriebswelle 36 direkt mit der Drehzahl der Getriebehauptwelle 30 rotiert.

Zwischen dem Antriebsmotor 5 und einem Getriebeeingang 7 ist erfindungsgemäß eine Kupplungseinrichtung 16 mit drei Reibkupplungen 40, 41, 42 angeordnet. Wie in Fig. 1a deutlich erkennbar, weisen die drei Reibkupplungen 40, 41, 42 ein gemeinsames äußeres Kupplungseingangsteil 31, welches mit der Antriebswelle 6 des Antriebsmotors 5 verbunden ist, sowie jeweils ein inneres Kupplungsausgangsteil 43, 44, 45 auf. Die erste, motornahe Reibkupplung 40 ist als eine Zwischengangkupplung ausgebildet, deren Ausgangsteil 43 mit der Getriebehauptwelle 30 verbunden ist. Die zweite, mittlere Reibkupplung 41 ist als eine Lastschaltkupplung ausgebildet, deren Ausgangsteil 44 über eine die Getriebehauptwelle 30 koaxial umgebende mittlere Hohlwelle 39 mit dem Losrad 14 der zweiten Gangkonstanten iₖ₂ der Splittergruppe 2 verbunden ist. Die dritte, motorferne Reibkupplung 42 ist ebenfalls als eine Lastschaltkupplung ausgebildet, deren Ausgangsteil 45 über eine die mittlere Hohlwelle 39 umgebende äußere Hohlwelle 46 mit dem Losrad 11 der ersten Gangkonstanten iₖ₁ der Splittergruppe 2 verbunden ist. Über die beiden Lastschaltkupplungen 41, 42 sind die Losräder 11, 14 der beiden Gangkonstanten iₖ₁, iₖ₂ reibschlüssig mit der Antriebswelle 6 verbindbar. Über die Zwischengangkupplung 40 ist die Getriebehauptwelle 30 reibschlüssig mit der Antriebswelle 6 verbindbar.

Zur Ansteuerung der Kupplungseinrichtung 16 ist ein nicht dargestelltes Kupplungssteuergerät, das in geeigneter Weise mit ebenfalls nicht dargestellten Getriebesteuer- und Motorsteuergeräten kommuniziert, angeordnet. Durch Ansteuern der Lastschaltkupplungen 41, 42 im Schlupf sind die Gangkonstanten iₖ₁, iₖ₂ ohne Kraftflussunterbrechung zum Antriebmotor 5 umschaltbar. Somit ist die Splittergruppe 2 lastschaltbar. Die Lastschaltkupplungen 41, 42 sind zudem jeweils als Anfahrelement betätigbar. Die Zwischengangkupplung 40 dient zur Herstellung einer Direktverbindung zwischen dem Antrieb und dem Abtrieb, welche im Schlupfbetrieb als Zwischengang geschaltet werden kann.

Aus der Kombination der Getriebegruppen 2, 3 und 4 des dargestellten Getriebeschemas ergeben sich insgesamt n = 2 x 3 x 2 = 12 Gänge. Der Kraftfluss des Getriebes 1 verzweigt sich nach einer Schaltfolge, bei der, beginnend mit dem 1. Gang im Hauptgetriebe 3, zunächst alternierend das Splittergetriebe 2 und das Hauptgetriebe 3 durchgeschaltet werden, so dass nacheinander 2 x 3 = 6 Gänge eines unteren Gangbereichs "1. Gang - 6. Gang" geschaltet werden. Ist der 6. Gang erreicht, schaltet das Bereichsgetriebe 4 um und es werden erneut das Hauptgetriebe 3 und das Splittergetriebe 2 alternierend durchgeschaltet, so dass wiederum 2 × 3 = 6 Gänge, nun aber in einem oberer Gangbereich "7. Gang - 12. Gang", geschaltet werden. Zudem schaltet das Splittergetriebe 2 auch die Rückwärtsgang-Übersetzung i_{R} alternierend, so dass zwei Rückwärtsgänge zur Verfügung stehen.

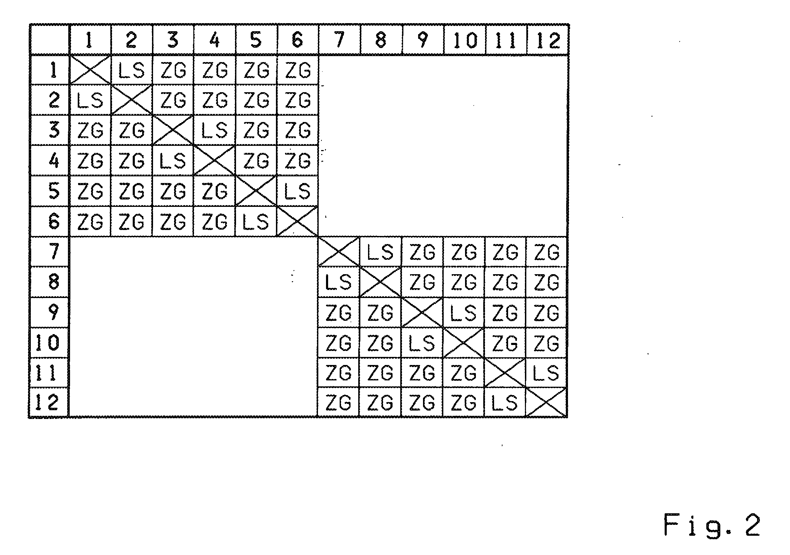

In Fig. 2 ist das Schaltschema des Getriebes 1 verdeutlicht. Die Tabelle unterscheidet Gangwechsel, die durch Umschalten der Gangkonstanten iₖ₁, iₖ₂ mit den Lastschaltkupplungen 41, 42 als direkte Lastschaltung LS ausgeführt werden und solche Gangwechsel mit Schaltvorgängen zwischen den Hauptgetriebegängen i₁, i₂, i₃, bei denen über die Zwischengangkupplung 40 während des Gangwechsels zur Zugkraftunterstützung eine Zwischengangschaltung ZG ausgeführt wird. Darin wird deutlich, dass sich bei sequenzieller Schaltfolge, also beispielsweise von 3. Gang in den 4. Gang und vom 4. Gang in den 5. Gang innerhalb der beiden Gangbereiche Lastschaltungen und Zwischengangschaltungen abwechseln. Bei Gangsprüngen können auch aufeinander folgende Zwischengangschaltungen vorkommen.

Ein erfindungsgemäßes Verfahren zum Betrieb eines Mehrgruppengetriebes eines Kraftfahrzeuges beruht im Wesentlichen darauf, dass bei einem Gangwechsel, je nach Schaltvorgang und beteiligten Getriebegruppen, eine Lastschaltung oder eine Zwischengangschaltung erfolgt, um die Zugkraft des Fahrzeuges zu erhalten.

Diejenigen Gangwechsel, bei denen die Gangkonstanten iₖ₁, iₖ₂ umgeschaltet werden, also nach der Schalttabelle von Fig. 2 die Gangwechsel "1. Gang - 2. Gang", "3. Gang - 4. Gang", "5. Gang - 6. Gang", "7. Gang - 8. Gang", "9.Gang - 10. Gang" und "11. Gang - 12. Gang", werden über die schlupfenden Lastschaltkupplungen 41, 42 direkt lastgeschaltet. Der dazwischen liegende verbleibende Gangwechsel "6. Gang - 7. Gang" erfolgt durch die Bereichsumschaltung der Bereichsgruppe 4.

Bei einem Gangwechsel mit einem Schaltvorgang innerhalb der Hauptgruppe 3 des Getriebes 1, also nach der Schalttabelle bei den Gangwechseln "2. Gang - 3. Gang", "4. Gang - 5. Gang", "8. Gang - 9. Gang" und "10. Gang - 11. Gang" wird der Direktgang, also der 12. Gang, als Zwischengang geschaltet. Dazu wird die Zwischengangkupplung 40 in Schließrichtung angesteuert, so dass sich das Motordrehmoment an der Getriebehauptwelle 30 bzw. direkt an der Getriebeabtriebswelle 36 abstützt. Dadurch wird das Hauptgetriebe 3 lastfrei und schaltbar.

Die Motordrehzahl wird bei einer Hochschaltung zwischen einem eingelegten Ursprungsgang und einem einzulegenden Zielgang während der Momentenabstützung über die schlupfende Zwischengangkupplung 40 auf die Synchrondrehzahl des Zielgangs abgesenkt. Die bei dem aktuell eingelegten Ursprungsgang jeweils geschlossene Lastschaltkupplung 41, 42 bleibt während des Schaltens des Zwischenganges geschlossen. Bei erreichter Drehzahlgleichheit zwischen der Getriebehauptwelle 30 und dem zu schaltenden Losrad 11, 14, 19, 22 kann der Zielgang eingelegt und die Zwischengangkupplung 40 wieder vollständig geöffnet werden, wodurch der Gangwechsel abgeschlossen wird.

### Bezugszeichenliste

- 1: Zwei-Vorgelegewellen-Getriebe
- 2: Vorschaltgruppe, Splittergetriebe
- 3: Hauptgruppe, Hauptgetriebe
- 4: Nachschaltgruppe, Bereichsgetriebe
- 5: Antriebsmotor
- 6: Antriebswelle
- 7: Getriebeeingang
- 8: Vorgelegewelle
- 9: Vorgelegewelle
- 10: Festrad
- 11: Losrad
- 12: Festrad
- 13: Festrad
- 14: Losrad
- 15: Festrad
- 16: Kupplungseinrichtung
- 17: Schalteinrichtung
- 18: Festrad
- 19: Losrad
- 20: Festrad
- 21: Festrad
- 22: Losrad
- 23: Festrad
- 24: Festrad
- 25: Zwischenrad
- 26: Losrad
- 27: Zwischenrad
- 28: Festrad
- 29: Schalteinrichtung
- 30: Getriebehauptwelle
- 31: Kupplungseingangsteil
- 32: Planetenradsatz
- 33: Planetenradträger
- 34: Sonnenrad
- 35: Hohlrad
- 36: Getriebeabtriebswelle
- 37: Schalteinrichtung
- 38: Gehäuse
- 39: Hohlwelle
- 40: Reibkupplung, Zwischengangkupplung
- 41: Reibkupplung, Lastschaltkupplung
- 42: Reibkupplung, Lastschaltkupplung
- 43: Kupplungsausgangsteil
- 44: Kupplungsausgangsteil
- 45: Kupplungsausgangsteil
- 46: Hohlwelle

- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i_{R}: Hauptgetriebe-Rückwärtsgang
- LS: Lastschaltung
- ZG: Zwischengangschaltung

## Patentansprüche

1. Mehrgruppengetriebe eines Kraftfahrzeuges, mit drei in einem Antriebsstrang angeordneten automatisierten Getriebegruppen (2, 3, 4), bei dem Mittel zur Zugkraftunterstützung bei Gangwechseln vorgesehen sind, wobei zwischen einem Antriebsmotor (5) und einem Getriebeeingang (7) eine Kupplungseinrichtung (16) mit drei Reibkupplungen (40, 41, 42) angeordnet ist, wobei die erste Reibkupplung (40) als eine Zwischengangkupptung ausgebildet ist, die eingangsseitig mit einer Antriebswelle (6) des Antriebsmotors (5) und ausgangsseitig mit einer mit einer Getriebeabtriebswelle (36) zumindest wirkverbundenen Getriebehauptwelle (30) verbunden ist, wobei die zweite Reibkupplung (41) als eine Lastschaltkupplung ausgebildet ist, die eingangsseitig mit der Antriebswelle (6) des Antriebsmotors (5) und ausgangsseitig mit einem Losrad (14) einer zweiten Gangkonstanten (iₖ₂) einer als Zahnradgetriebe ausgebildeten Vorschaltgruppe (2) verbunden ist, wobei die dritte Reibkupplung (42) als eine Lastschaltkupplung ausgebildet ist, die eingangsseitig mit der Antriebswelle (6) des Antriebsmotors (5) und ausgangsseitig mit einem Losrad (11) einer ersten Gangkonstanten (iₖ₁) der Vorschaltgruppe (2) verbunden ist, und wobei über die Zwischengangkupplung (40) eine Direktverbindung zwischen der Antriebswelle (6) des Antriebsmotors (5) und der Getriebehauptwelle (30) herstellbar ist und über die Lastschaltkupplungen (41, 42) die Gangkonstanten (iₖ₁, iₖ₂) der Vorschaltgruppe (2) lastschaltbar sind, wobei die getriebeeingangsseitige Vorschaltgruppe (2) mit den beiden Gangkonstanten (iₖ₁, iₖ₂), eine zentrale Hauptgruppe (3) und eine getriebeausgangsseitige Nachschaltgruppe (4) mit zwei Gangbereichen im Kraftfluss hintereinander angeordnet sind, wobei die Vorschaltgruppe (2) und die Hauptgruppe (3) als Zahnradgetriebe in Vorgelegebauweise mit wenigstens einer gemeinsamen Vorgelegewelle (8, 9) ausgebildet sind und die Nachschaltgruppe (4) als ein Planetengetriebe ausgebildet ist, **dadurch gekennzeichnet, dass** die Hauptgruppe (3) wenigstens drei Gangstufen (i₁, i₂, i₃) besitzt.

2. Mehrgruppengetriebe nach Anspruch 1, **dadurch gekennzeichnet, dass** die drei Reibkupplungen (40, 41, 42) ein gemeinsames äußeres, motorseitig mit der Antriebswelle (6) verbundenes Kupplungseingangsteil (31) und jeweils ein inneres Kupplungsausgangsteil (43, 44, 45) aufweisen.

3. Mehrgruppengetriebe nach Anspruch 1 oder 2, **dadurch gekennzeichnet, dass** die drei Reibkupplungen (40, 41, 42) koaxial zueinander angeordnet sind, wobei die mit dem Kupplungsausgangsteil (43) der Zwischengangkupplung (40) verbundene Getriebehauptwelle (30) als eine innere Welle angeordnet ist, welche von einer mit dem Kupplungsausgangsteil (44) der zweiten Reibkupplung (41) verbundenen mittleren Hohlwelle (39) umgeben ist, welche wiederum von einer mit dem Kupplungsausgangsteil (45) der dritten Reibkupplung (42) verbundenen äußeren Hohlwelle (46) umgeben ist, wobei die mittlere Hohlwelle (39) mit dem Losrad (14) der zweiten, motorfernen Gangkonstanten (iₖ₂) der Vorschaltgruppe (2) verbunden ist und die äußere Hohlwelle (46) mit dem Losrad (11) der ersten, motornahen Gangkonstanten (iₖ₁) der Vorschaltgruppe (2) verbunden ist.

4. Mehrgruppengetriebe nach einem der Ansprüche 1 bis 3, **dadurch gekennzeichnet, dass** die Getriebehauptwelle (30) über die Nachschaltgruppe (4) mit der Getriebeabtriebswelle (36) wirkverbunden ist.

5. Mehrgruppengetriebe nach einem der Ansprüche 1 bis 4, **dadurch gekennzeichnet, dass** die Nachschaltgruppe (4) lastschaltbar ausgebildet ist.

6. Mehrgruppengetriebe nach einem der Ansprüche 1 bis 3, **dadurch gekennzeichnet, dass** die Getriebehauptwelle (30) direkt mit der Getriebeabtriebswelle (36) verbunden ist.

7. Verfahren zum Betrieb eines Mehrgruppengetriebes eines Kraftfahrzeuges, mit wenigstens zwei in einem Antriebsstrang angeordneten Getriebegruppen (2, 3), bei dem bei einem Gangwechsel zugkraftunterstützende Mittel aktiviert werden, wobei vorgesehene Schaltvorgänge zwischen Gangkonstanten (iₖ₁, iₖ₂) innerhalb einer Vorschaltgruppe (2) mittels einer Lastschaltung durchgeführt werden, bei der zwischen einem Antriebsmotor (5) und einem Getriebeeingang (7) angeordnete, die Gangkonstanten (iₖ₁, iₖ₂) beaufschlagende Lastschaltkupplungen (41, 42) im Schlupf betrieben werden, und dass bei anderen zugkraftrelevanten Schaltvorgängen eine Zwischengangschaltung erfolgt, bei der eine ebenfalls zwischen dem Antriebsmotor (5) und dem Getriebeeingang (7) angeordnete Zwischengangkupplung (40) im Schlupf betrieben wird, wobei über die Zwischengangkupplung (40) eine direkte Kraftflussverbindung zwischen dem Antriebsmotor (5) und einer mit einer Getriebeabtriebswelle (36) zumindest wirkverbundenen Getriebehauptwelle (30) hergestellt wird, **dadurch gekennzeichnet, dass** bei einer Zwischengangschaltung während eines Gangwechsels die Zwischengangkupplung (40) im Schlupfbetrieb das Motormoment des Antriebsmotors (5) an der abtriebsseitigen Getriebehauptwelle (30) abstützt, während die Drehzahl des Antriebsmotors (5) an eine Synchrondrehzahl eines Zielganges angepasst wird, der Ursprungsgang lastfrei ausgelegt und der Zielgang bei erreichter Synchrondrehzahl eingelegt wird, und schließlich der Zwischengang wieder geöffnet wird.

8. Verfahren nach Anspruch 7, **dadurch gekennzeichnet, dass** während des Schaltens des Zwischenganges die bei dem aktuell eingelegten Ursprungsgang jeweils geschlossene Lastschaltkupplung (41, 42) geschlossen bleibt.

## Claims

1. Multi-group gearbox of a motor vehicle, having three automatic gearbox groups (2, 3, 4) arranged in a drivetrain, in which multi-group gearbox are provided means for tractive force assistance during gearshifts, with a clutch device (16) which has three friction clutches (40, 41, 42) being arranged between a drive engine (5) and a gearbox input (7), with the first friction clutch (40) being designed as an intermediate gear clutch which is connected at the input side to a driveshaft (6) of the drive engine (5) and at the output side to a gearbox main shaft (30) which is at least operatively connected to a gearbox drive output shaft (36), with the second friction clutch (41) being designed as a powershift clutch which is connected at the input side to the driveshaft (6) of the drive engine (5) and at the output side to a loose wheel (14) of a second gear constant (iₖ₂) of a front-mounted group (2) designed as a gearwheel mechanism, with the third friction clutch (42) being designed as a powershift clutch which is connected at the input side to the driveshaft (6) of the drive engine (5) and at the output side to a loose wheel (11) of a first gear constant (iₖ₁) of the front-mounted group (2), and with it being possible for a direct connection to be produced between the driveshaft (6) of the drive engine (5) and the gearbox main shaft (30) by means of the intermediate gear clutch (40), and for the gear constants (iₖ₁, iₖ₂) of the front-mounted group (2) to be shifted under load by means of the powershift clutches (41, 42), with the gearbox-input-side front-mounted group (2) which has the two gear constants (iₖ₁, iₖ₂), a central main group (3), and a gearbox-output-side rear-mounted group (4) which has two gear ranges being arranged in series in the power flow, with the front-mounted group (2) and the main group (3) being formed, as countershaft-type gearwheel mechanisms, with at least one common countershaft (8, 9), and with the rear-mounted group (4) being designed as a planetary gear set, **characterized in that** the main group (3) has at least three gear stages (i₁, i₂, i₃) .

2. Multi-group gearbox according to Claim 1, **characterized in that** the three friction clutches (40, 41, 42) have a common outer clutch input part (31) connected at the engine side to the driveshaft (6), and in each case one inner clutch output part (43, 44, 45).

3. Multi-group gearbox according to Claim 1 or 2, **characterized in that** the three friction clutches (40, 41, 42) are arranged coaxially with respect to one another, with the gearbox main shaft (30) which is connected to the clutch output part (43) of the intermediate gear clutch (40) being arranged as an inner shaft, said inner shaft being surrounded by a middle hollow shaft (39) which is connected to the clutch output part (44) of the second friction clutch (41), and said middle hollow shaft in turn being surrounded by an outer hollow shaft (46) which is connected to the clutch output part (45) of the third friction clutch (42), with the central hollow shaft (39) being connected to the loose wheel (14) of the second gear constant (iₖ₂), which is remote from the engine, of the front-mounted group (2), and with the outer hollow shaft (46) being connected to the loose wheel (11) of the first gear constant (iₖ₁), which is close to the engine, of the front-mounted group (2).

4. Multi-group gearbox according to one of Claims 1 to 3, **characterized in that** the gearbox main shaft (30) is operatively connected to the gearbox drive output shaft (36) via the rear-mounted group (4).

5. Multi-group gearbox according to one of Claims 1 to 4, **characterized in that** the rear-mounted group (4) is designed such that it can be shifted under load.

6. Multi-group gearbox according to one of Claims 1 to 3, **characterized in that** the gearbox main shaft (30) is connected directly to the gearbox drive output shaft (36).

7. Method for operating a multi-group gearbox of a motor vehicle, having at least two gearbox groups (2, 3) arranged in a drivetrain, in which method means for tractive force assistance are activated during a gearshift, with shift processes provided between gear constants (iₖ₁, iₖ₂) within a front-mounted group (2) being carried out by means of a powershift during which powershift clutches (41, 42) which are arranged between a drive engine (5) and a gearbox input (7) and which act on the gear constants (iₖ₁, iₖ₂) are operated in a slipping manner, and in that, during other shift processes which are relevant with regard to tractive force, an intermediate gear shift takes place, during which an intermediate gear clutch (40) which is likewise arranged between the drive engine (5) and the gearbox input (7) is operated in a slipping manner, with a direct power flow connection between the drive engine (5) and a gearbox main shaft (30) which is at least operatively connected to a gearbox drive output shaft (36) being produced by means of the intermediate gear clutch (40), **characterized in that**, in the event of an intermediate gear shift during a gearshift, the intermediate gear clutch (40), in slipping operation, supports the engine torque of the drive engine (5) on the drive-output-side gearbox main shaft (30) while the rotational speed of the drive engine (5) is adapted to a synchronous rotational speed of a target gear, the source gear is disengaged in a load-free manner, and the target gear is engaged when the synchronous rotational speed is reached, and finally the intermediate gear is opened again.

8. Method according to Claim 7, **characterized in that**, during the shift of the intermediate gear, the powershift clutch (41, 42) which is in each case closed in the presently engaged source gear remains closed.

## Revendications

1. Boîte de vitesses à plusieurs groupes d'un véhicule automobile, comprenant trois groupes de boîte de vitesses (2, 3, 4) automatisés, disposés dans une chaîne cinématique, des moyens étant prévus pour l'assistance à la force de traction dans le cas de changements de vitesse, un dispositif d'embrayage (16) avec trois embrayages à friction (40, 41, 42) étant disposé entre un moteur d'entraînement (5) et une entrée de boîte de vitesses (7), le premier embrayage à friction (40) étant réalisé sous forme d'embrayage pour vitesse intermédiaire, qui est connecté du côté de l'entrée à un arbre d'entraînement (6) du moteur d'entraînement (5) et du côté de la sortie à un arbre principal de boîte de vitesses (30) connecté au moins fonctionnellement à un arbre de prise de force de boîte de vitesses (36), le deuxième embrayage à friction (41) étant réalisé sous forme d'embrayage à commutation de charge, qui est connecté du côté de l'entrée à l'arbre d'entraînement (6) du moteur d'entraînement (5) et du côté de la sortie à un pignon fou (14) d'une deuxième constante de vitesse (iₖ₂) d'un groupe monté en amont (2) réalisé sous forme d'engrenage à roue dentée, le troisième embrayage à friction (42) étant réalisé sous forme d'embrayage à commutation de charge, qui est connecté du côté de l'entrée à l'arbre d'entraînement (6) du moteur d'entraînement (5) et du côté de la sortie à un pignon fou (11) d'une première constante de vitesse (iₖ₁) du groupe monté en amont (2), une connexion directe entre l'arbre d'entraînement (6) du moteur d'entraînement (5) et l'arbre principal de boîte de vitesses (30) pouvant être établie par le biais de l'embrayage pour vitesse intermédiaire (40), et les constantes de vitesse (iₖ₁, iₖ₂) du groupe monté en amont (2) pouvant être commutées en charge par le biais des embrayages à commutation de charge (41, 42), le groupe monté en amont (2) du côté de l'entrée de la boîte de vitesses avec les deux constantes de vitesse (iₖ₁, iₖ₂), un groupe principal central (3) et un groupe monté en aval (4) du côté de la sortie de la boîte de vitesses avec deux régions de vitesse étant disposés les uns derrière les autres dans le flux de force, le groupe monté en amont (2) et le groupe principal (3) étant réalisés sous forme d'engrenage à roue dentée dans une construction intermédiaire, avec au moins un arbre intermédiaire commun (8, 9), et le groupe monté en aval (4) étant réalisé sous forme d'engrenage planétaire, **caractérisée en ce que** le groupe principal (3) possède au moins trois rapports de vitesse (i₁, i₂, i₃).

2. Boîte de vitesses à plusieurs groupes selon la revendication 1, **caractérisée en ce que** les trois embrayages à friction (40, 41, 42) présentent une partie d'entrée d'embrayage commune extérieure (31), connectée du côté du moteur à l'arbre d'entraînement (6), et à chaque fois une partie de sortie d'embrayage intérieure (43, 44, 45).

3. Boîte de vitesses à plusieurs groupes selon la revendication 1 ou 2, **caractérisée en ce que** les trois embrayages à friction (40, 41, 42) sont disposés coaxialement les uns aux autres, l'arbre principal de boîte de vitesses (30) connecté à la partie de sortie d'embrayage (43) de l'embrayage pour vitesse intermédiaire (40) étant disposé sous forme d'arbre intérieur, qui est entouré par un arbre creux central (39) connecté à la partie de sortie d'embrayage (44) du deuxième embrayage à friction (41), qui est à son tour entouré par un arbre creux extérieur (46) connecté à la partie de sortie d'embrayage (45) du troisième embrayage à friction (42), l'arbre creux central (39) étant connecté au pignon fou (14) de la deuxième constante de vitesse (iₖ₂) éloignée du moteur du groupe monté en amont (2) et l'arbre creux extérieur (46) étant connecté au pignon fou (11) de la première constante de vitesse (iₖ₁) proche du moteur du groupe monté en amont (2).

4. Boîte de vitesses à plusieurs groupes selon l'une quelconque des revendications 1 à 3, **caractérisée en ce que** l'arbre principal de boîte de vitesses (30) est connecté fonctionnellement à l'arbre de prise de force de boîte de vitesses (36) par le biais du groupe monté en aval (4).

5. Boîte de vitesses à plusieurs groupes selon l'une quelconque des revendications 1 à 4, **caractérisée en ce que** le groupe monté en aval (4) est réalisé de manière à pouvoir être commuté en charge.

6. Boîte de vitesses à plusieurs groupes selon l'une quelconque des revendications 1 à 3, **caractérisée en ce que** l'arbre principal de boîte de vitesses (30) est connecté directement à l'arbre de prise de force de boîte de vitesses (36).

7. Procédé pour faire fonctionner une boîte de vitesses à plusieurs groupes d'un véhicule automobile, comprenant au moins deux groupes de boîte de vitesses (2, 3) disposés dans une chaîne cinématique, des moyens prévus pour l'assistance à la force de traction étant activés dans le cas d'un changement de vitesse, des opérations de changement de vitesse prévues étant réalisées entre des constantes de vitesse (iₖ₁, iₖ₂) à l'intérieur d'un groupe monté en amont (2) au moyen d'une commutation de charge, dans lequel des embrayages à commutation de charge (41, 42) disposés entre un moteur d'entraînement (5) et une entrée de boîte de vitesses (7), sollicitant les constantes de vitesse (iₖ₁, iₖ₂), sont entraînés en mode de glissement, et en ce que dans le cas d'autres opérations de changement de vitesse à force de traction, une commutation de vitesse intermédiaire a lieu, dans laquelle un embrayage pour vitesse intermédiaire (40) disposé également entre le moteur d'entraînement (5) et l'entrée de boîte de vitesses (7) est entraîné en mode de glissement, une liaison à engagement par force directe entre le moteur d'entraînement (5) et un arbre principal de boîte de vitesses (30) au moins connecté fonctionnellement à un arbre de prise de force de boîte de vitesses (36) étant établie par le biais de l'embrayage pour vitesse intermédiaire (40), **caractérisé en ce que**, dans le cas d'une commutation de vitesse intermédiaire pendant un changement de vitesse, l'embrayage pour vitesse intermédiaire (40) en mode de glissement supporte le couple moteur du moteur d'entraînement (5) au niveau de l'arbre principal de boîte de vitesses (30) du côté de la prise de force, tandis que le régime du moteur d'entraînement (5) est adapté à un régime synchrone d'une vitesse cible, la vitesse initiale étant désengagée sans charge et la vitesse cible étant engagée dès que le régime synchrone est atteint, et finalement la vitesse intermédiaire étant à nouveau ouverte.

8. Procédé selon la revendication 7, **caractérisé en ce que**, pendant la commutation de la vitesse intermédiaire, l'embrayage à commutation de charge (41, 42) à chaque fois fermé lorsque la vitesse initiale est actuellement engagée, reste fermé.
